# EUROPEAN PATENT APPLICATION

(11) **EP 1 965 379 A1**
(43) Date of publication of application: **03.09.2008**
(21) Application number: 08003451.5
(22) Date of filing: 26.02.2008
(51) Int. Cl.: G11B 7/12, G11B 7/09

(54) **Objective lens actuator and optical pickup device including the same**

(30) Priority: 27.02.2007 JP 2007046608
(71) Applicant: Funai Electric Co., Ltd., Daito-shi Osaka 574-0013 (JP)
(72) Inventor: Kasahara, Takashi, Daito-shi Osaka 574-0013 (JP); Hayashi, Sotaro, Daito-shi Osaka 574-0013 (JP)
(74) Representative: Beetz & Partner

(57) **Abstract**

An objective lens actuator (21) includes a lens holder (24) which holds an objective lens (17). A collision preventing portion (31) which prevents collision of the objective lens (17) and an optical disc (50) and a cleaning portion (32) which performs cleaning of the optical disc (50) when the objective lens (17) and the optical disc (50) collide with each other, are set up on the lens holder (24). It is preferable that the collision preventing portion (31) and the cleaning portion (32) are disposed such that the collision preventing portion (31) is located in an up stream side of a rotating direction of the optical disc (50) and the cleaning portion (32) is located in a down stream side of the rotating direction of the optical disc (50).

## Description

### BACKGROUND OF THE INVENTION

### Field of the Invention

The present invention relates to an objective lens actuator which drives an objective lens, and an optical pickup device including the objective lens actuator.

### Description of Related Art

An optical recording medium such as a compact disc (hereinafter referred to as a CD), or a digital versatile disc (hereinafter referred to as a DVD) has become popular. In addition, recently, to increase amount of information to be recorded on the optical recording medium, a study about high density recording on the optical recording medium is advanced, and for example, an optical recording medium which can record large capacity of information such as a HD-DVD which is high definition DVD or a Blu-ray Disc (hereinafter referred to as a BD) has begun to be put to practical use.

To perform recording or reproducing of such optical recording medium by an optical disc apparatus, an optical pickup device which makes recording of information or reproducing of information possible by irradiating light beam on the optical recording medium, is utilized. When reading or recording of information is performed from/to the optical recording medium (for example, a BD) which can record large capacity of information as above described by the optical pickup device, it is necessary to make spot size of a beam spot small which is formed on the optical recording medium by a light beam that is emitted from a light source.

It is usually performed that a wavelength of the light source which emits the light beam is made shorter and at the same time a numerical aperture of an objective lens is made larger in case where the spot size of a light spot is made smaller. If the numerical aperture of the objective lens is made larger, a distance between a tip of the objective lens and the optical recording medium (working distance; WD) becomes narrower when reading or writing of information from/to the optical recording medium by the optical pickup device is performed.

By the way, in the optical pickup device, positional relation between the objective lens and the optical recording medium is controlled to be constant by an objective lens actuator such that the light beam which is emitted from the light source is always focused on a recording surface of the optical recording medium regardless to surface shaking or the like of the optical recording medium. Hereinafter, control of this kind will also be referred to as focus servo.

However, as above described, the WD is tend to become very narrow in the recent optical pickup device. As a result, a possibility that the objective lens and the optical recording medium collide with each other becomes very high, for example, when an optical recording medium which has large surface shaking is used or when the focus servo is out of control by a scratch on the optical recording medium or by vibration from outside or the like.

Because of these, a contrivance is performed heretofore to prevent that information recorded on an optical recording medium cannot be reproduced by the collision of the objective lens and the optical recording medium or that the optical pickup device cannot be used by damage of the objective lens. To be more concrete, it is performed that, for example, a lens protector for prevention of the collision is set up around the objective lens (For example, see JP-A-2006-338783 and JP-A-H5-334708).

However, in case where a structure is employed in that the lens protector for prevention of the collision is set up, the lens protector will be worn when the collision of the lens protector and the optical recording medium happens. As a result, there is a possibility a problem is caused that worn object which drops from the lens protector adheres on the optical recording medium. In this regard, an objective lens collision prevention protecting portion which is disclosed in JP-A-2006-338783 has a structure in that a protector surface material which has a specific dynamic viscoelasticity is formed on the surface layer. By this arrangement, it says that adhesion of the protector surface material on the optical recording medium by the wear can be reduced.

However, in case where the structure disclosed in JP-A-2006-338783 is employed, it is anticipated that problems that operation load will be increased when the optical pickup device is manufactured and cost of it will be increased because precise quality control is required when the objective lens collision prevention protecting portion is formed and the like, are caused.

Further, in JP-A-H5-334708, a structure is disclosed in that a cleaning member which is made of material such as felt or non woven fabric is set up on the objective lens actuator. This cleaning member is set up adjoining more to the optical recording medium side than a tip of curved surface of the objective lens. Because of this when an impact is loaded to the device, the cleaning member collides first with the optical recording medium then the collision of the objective lens and the optical recording medium can be prevented.

However, it is suspected that deformation of the cleaning member is much large when the cleaning member collides with the optical recording medium because the cleaning member is made of soft material such as felt or the like. As a result, when the collision of the objective lens and the optical recording medium is intended to prevent by the cleaning member, necessity is generated that the cleaning member is made thicker. In this regard in the optical pickup device which is applicable to a BD or the like, it is not preferable that the cleaning member becomes thicker because the working distance is narrow as above described.

### SUMMARY OF THE INVENTION

In view of the above described points it is an object of the present invention to provide an objective lens actuator which can prevent a collision of an objective lens and an optical recording medium with simple structure and can perform removal of an adhered object that adheres on the optical recording medium. Further, it is another object of the present invention to provide an optical pickup device which can perform stably reading of information from the optical recording medium or recording of information on the optical recording medium with low error rate by including such objective lens actuator.

To attain the above described object an objective lens actuator in accordance with the present invention includes: an objective lens which condenses a light beam on a recording surface of an optical recording medium; a lens holder which holds the objective lens; a driving mechanism which makes the lens holder capable of moving at least in a focusing direction that is a direction perpendicular to the recording surface and a tracking direction that is a direction parallel to a radial direction of the optical recording medium. Further, a collision preventing portion which prevents collision of the objective lens and the optical recording medium and a cleaning portion which performs cleaning of the optical recording medium when the objective lens and the collision preventing portion collide with each other, are set up on the lens holder so as to oppose to the optical recording medium.

By this arrangement the collision of the objective lens and the optical recording medium can be prevented by the collision preventing portion. Further, it is possible to perform cleaning of adhered object on the optical recording medium or stain of the optical recording medium by the cleaning portion when the optical recording medium and the collision preventing portion collide with each other. As a result, when the objective lens actuator in accordance with the present invention is utilized, possibility to damage the objective lens can be reduced, in addition, it becomes possible to keep surface of the optical recording medium clean.

In the objective lens actuator which is structured as above described it is preferable that the collision preventing portion and the cleaning portion are disposed such that the collision preventing portion is located in an up stream side of a rotating direction of the optical recording medium and the cleaning portion is located in a down stream side of the rotating direction of the optical recording medium.

By this arrangement even when the collision preventing portion and the optical recording medium collide with each other, a worn object is generated, and the worn object is adhered on the optical recording medium, the worn object adhered on the optical recording medium can be cleaned at once because the cleaning portion is set up in a down stream side of the rotating direction of the optical recording medium.

In the objective lens actuator which is structured as above described it is preferable that the cleaning portion has a size which is approximately equal to or larger than that of the collision preventing portion.

By this arrangement because the cleaning portion has a size which is approximately equal to or larger than that of the collision preventing portion, it becomes possible to remove the adhered object generated by the wear of the collision preventing portion with high probability.

In the objective lens actuator which is structured as above described it is preferable that the cleaning portion has a shape that is elongated in a direction substantially parallel to the tracking direction.

By this arrangement it becomes possible to widen an area where the cleaning portion can remove the adhered object and a stain by rotating of the optical recording medium.

Further, to attain the above described object an optical pickup device in accordance with the present invention is characterized by including the objective lens actuator which is structured as above described.

By this arrangement because the optical pickup device in accordance with the present invention includes the objective lens actuator which is structured as above described, the optical pickup device can perform stably reading of information from the optical recording medium and writing of information in the optical recording medium with low error rate.

It is preferable that the optical pickup device which is structured as above described is applicable to at least a Blu-ray Disc.

When reproducing or recording of information from/to a BD is performed, there is high probability that the objective lens and the optical recording medium collide with each other because working distance in the optical pickup device is made narrower. Therefore, according to the present invention, effect of setting up the collision preventing portion and the cleaning portion becomes larger.

### BRIEF DESCRIPTION OF THE DRAWINGS

Fig. 1 is a schematic plan view to show a structure of an optical pickup device according to the present embodiment;
Fig. 2 is a schematic perspective view to show a structure of an objective lens actuator according to the present embodiment;
Fig. 3A is a schematic perspective view to show a structure of a lens holder which is included in the objective lens actuator according to the present embodiment;
Fig. 3B is an exploded perspective view to show a structure of the lens holder which is included in the objective lens actuator according to the present embodiment;
Fig. 4 is a schematic plan view to show the lens holder which is included in the objective lens actuator according to the present embodiment when viewed from above;
Fig. 5A is a diagram to show positional relation among a first objective lens, an optical disc, a collision preventing portion, and a cleaning portion using a schematic cross sectional view of the lens holder when cut along a line V - V in Fig. 4, and it shows a state where the collision preventing portion, the cleaning portion, and the optical disc do not collide with each other; and
Fig. 5B is a diagram to show positional relation among a first objective lens, an optical disc, a collision preventing portion, and a cleaning portion using a schematic cross sectional view of the lens holder when cut along a line V - V in Fig. 4, and it shows a state where the collision preventing portion, the cleaning portion, and the optical disc collide with each other.

### DETAILED DESCRIPTION OF THE PREFERRED EMBODIMENTS

Hereinafter, an embodiment of the present invention will be explained with reference to accompanied drawings. At this point, the embodiment shown here is mere one example and the present invention is not limited to the embodiment shown here.

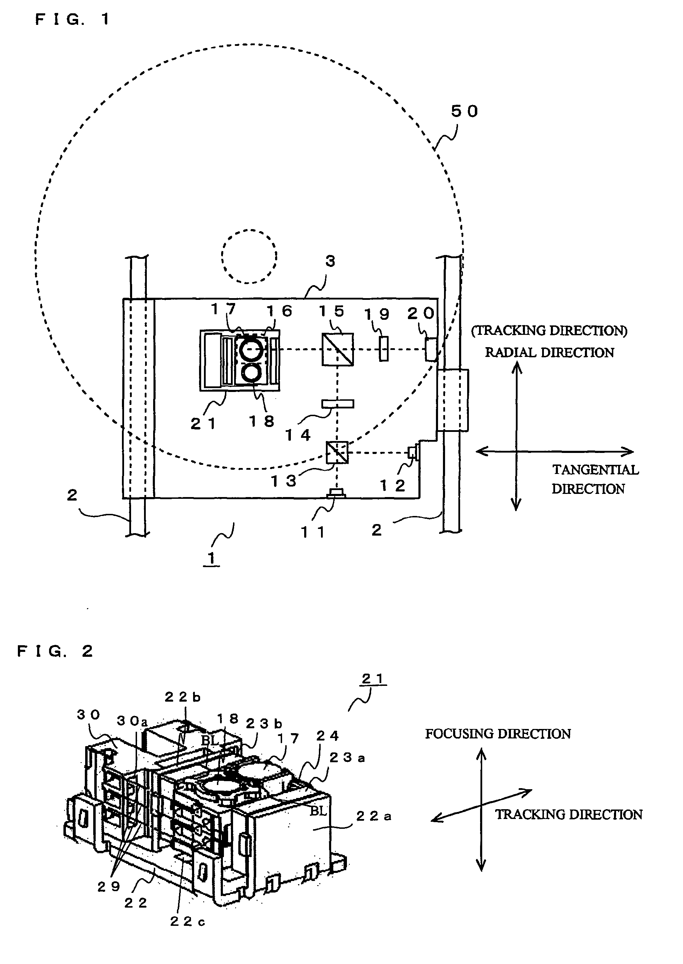

First, a structure of an optical pickup device which includes an objective lens actuator in accordance with the present invention will be explained. Fig. 1 is a schematic plan view to show a structure of the optical pickup device 1 according to the present embodiment. In Fig. 1, even portions of an optical system which can not be seen actually are also shown as if they can be seen for the sake of convenience in order that explanation of the optical system which is included in the optical pickup device 1 becomes more understandable.

The optical pickup device 1 according to the present embodiment is set up such that it can perform reading and writing of information from/to three kinds of optical discs (optical recording medium) 50 such as a CD, a DVD, and a BD by irradiating a laser beam. This optical pickup device 1 is supported slidably on two guide rails 2 which are disposed in the optical disc apparatus when it is utilized in the optical disc apparatus, for example. The guide rails 2 are disposed in parallel to a radius direction (radial direction) of the optical disc 50 and the optical pickup device 1 is moved in the radial direction along the guide rails 2 to perform reading of information which is recorded on the optical disc 50 and writing of information on the optical disc 50.

As shown in Fig. 1, in the optical system which is included in the optical pickup device 1, a first light source 11, a second light source 12, a dichroic prism 13, a collimator lens 14, a beam splitter 15, an upstand mirror 16, a first objective lens 17, and a second objective lens 18 are included. Other optical members, such as a wave aberration correcting element which performs correction of a wave aberration and the like, for example, are adequately disposed in adequate positions when they are necessary.

The first light source 11 is a single wavelength laser diode that emits a laser beam having a wavelength of 405 nm band which is used for a BD. The second light source 12 is a two wavelength laser diode that able to switch laser beams of two kinds of wavelength and emits a laser beam having a wavelength of 650 nm band which is used for a DVD and a laser beam having a wavelength of 780 nm band which is used for a CD. The laser beams emitted from the first light source 11 and the second light source 12 are sent to the dichroic prism 13.

The dichroic prism 13 passes the laser beam emitted from the first light source 11, and reflects the laser beam emitted from the second light source 12. The laser beam which passes the dichroic prism 13 is sent to the collimator lens 14 to be converted to a parallel ray. The beam splitter 15 reflects the laser beams emitted from the first light source 11 and the second light source 12 to guide the laser beam toward the optical disc 50, and passes and guides reflected light from the recording surface (not shown) of the optical disc 50 toward a photo detector 20.

The laser beam which is emitted from the first light source 11 or the second light source 12 and reflected by the beam splitter 15 is reflected by the upstand mirror 16 to have a traveling direction substantially perpendicular to the disc surface of the optical disc 50. The laser beam reflected by the upstand mirror 16 is sent to the first objective lens 17 or the second objective lens 18.

The first objective lens 17 and the second objective lens 18 both have a function to condense an input laser beam on the recording surface of the optical disc 50, and both of the objective lenses are mounted on an objective lens actuator 21 which will be described in detail later. The first objective lens 17 is designed as an objective lens for a BD, while the second objective lens 18 is designed as an objective lens for a DVD and a CD. The arrangement of the first objective lens 17 or the second objective lens 18 in the optical path is selectively switched according to the type of the optical disc 50 in use.

In this embodiment, the switching between the first objective lens 17 and the second objective lens 18 is carried out by moving the objective lens actuator 21 in the radial direction with respect to an optical pickup base 3 by moving means (not shown). It is to be noted however that the structure to selectively use the two objective lenses 17, 18 is not intended to be limited to this, and it is no problem that the selective switching is achieved by, for example, the structure of the optical system.

The reflected light reflected at the recording surface of the optical disc 50 passes through the first objective lens 17 or the second objective lens 18, is reflected by the upstand mirror 16, and passes through the beam splitter 15. The reflected light passing the beam splitter 15 is condensed by a condenser lens 19 to be focused onto a light receiving area (not shown) of the photo detector 20.

The photo detector 20 plays a role to convert an optical signal received at the light receiving area to an electric signal. The electric signal from the photo detector 20 is processed to become a reproduction signal for reproducing information, a focus error signal or a tracking error signal which is used to perform focus adjustment or tracking adjustment of the objective lenses 17, 18, or the like.

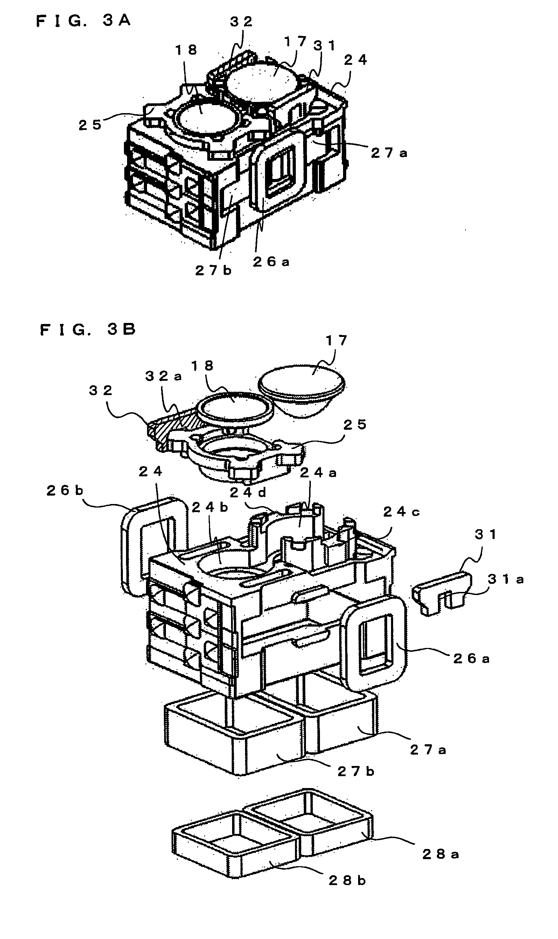

Next, a general structure of the objective lens actuator 21 according to the present embodiment will be described with reference to Fig. 2, Fig. 3A, and Fig. 3B. Fig. 2 is a schematic perspective view to show the structure of the objective lens actuator 21 according to the present embodiment. Fig. 3A and Fig. 3B are diagrams to explain the structure of a lens holder 24 which is included in the objective lens actuator 21 according to the present embodiment, Fig. 3A is a schematic perspective view to show the structure of the lens holder 24, and Fig. 3B is an exploded perspective view to show the structure of the lens holder 24.

The objective lens actuator 21 mainly includes a base 22, permanent magnets 23a, 23b, the lens holder 24 and wires 29.

The base 22 is made of a ferromagnetic metal, and has a through hole 22c formed approximately in the center to transmit a laser beam. The lens holder 24 to be described later in detail is disposed above the through hole 22c. A pair of permanent magnets 23a, 23b facing each other with a predetermined distance therebetween so as to sandwich the lens holder 24 are provided to stand on the base 22.

Each of the permanent magnets 23a, 23b has magnetic poles opposite to each other at a parting line BL as the boundary. The permanent magnet 23a and the permanent magnet 23b are disposed so that the same magnetic poles face each other. That is, for example, they are disposed such that N poles face each other in front of the parting line BL in Fig. 2, and S poles face each other at the back of the parting line BL. The outer surfaces of the permanent magnets 23a, 23b are magnetically fixed to projection pieces 22a, 22b which are formed by bending from the base 22.

Two holding portions 24a, 24b are formed at the lens holder 24 to be able to hold the first objective lens 17 and the second objective lens 18. Further in the lens holder 24, a through hole is formed which extends a parallel direction with an optical axis direction of the objective lenses 17, 18 to pass the laser beam to the first objective lens 17 and the second objective lens 18 that are held by the two holding portions 24a, 24b.

The first objective lens 17 is directly bonded to the first holding portion 24a using an adhesive material to be held there. On the other hand the second objective lens 18 is bonded and held using an adhesive material to a tilt adjusting holder 25. The tilt adjusting holder 25 is bonded to the second holding portion 24b using an adhesive material and the second objective lens 18 is held on the lens holder 24.

The reason for mounting the second objective lens 18 on the lens holder 24 in a state being held on the tilt adjusting holder 25 is to make adjustment of a relative tilt between the first objective lens 17 and the second objective lens 18 possible when assembling of the objective lens actuator 21 is performed.

Although a structure is employed in which only the second objective lens 18 is mounted on the tilt adjusting holder 25 in this embodiment, it is no problem that a structure is employed in which the first objective lens 17 is also mounted on the tilt adjusting holder 25. However, it is enough that one of the objective lenses is structured to be held on the tilt adjusting holder 25 because a relative tilt between the objective lenses 17, 18 can be adjusted as far as tilting of any one of the objective lenses is adjusted.

Tracking coils 26a, 26b are set up to face each other on outside of the both side walls of the lens holder 24 which face the permanent magnets 23a, 23b. The tracking coils 26a, 26b are connected by a single wire as a whole.

Further, a focusing coil 27a and a focusing coil 27b are provided side by side with the same height, inward of the lens holder 24 in such a way that the focusing coil 27a surrounds the optical axis of the first objective lens 17 and the focusing coil 27b surrounds the optical axis of the second objective lens 18. The focusing coils 27a, 27b are connected by a single wire.

In addition, a tilting coil 28a and a tilting coil 28b are provided side by side with the same height, inward of the lens holder 24 and under the focusing coils 27a, 27b in such a way that the tilting coil 28a surrounds the optical axis of the first objective lens 17 and the tilting coil 28b surrounds the optical axis of the second objective lens 18. The tilting coils 28a, 28b are connected by a single wire.

The lens holder 24 which is configured as above described is slidably supported by a plurality of conductive wires 29 (three wires are provided on each of the right and left sides) having respective one ends fixed to respective right and left side walls of the lens holder 24 (side walls on which the tracking coils 26a, 26b are not provided). The wires 29 are inserted in gel holes 30a of a gel holder 30 which is formed on the base 22, and other ends of the wires are connected and soldered to a circuit board (not shown) provided adjacent to the gel holder 30.

A gel material is filled in the gel holes 30a, and by this arrangement, the gel holder 30 plays a role to attenuate and suppress vibration occurring on each wire 29 as the lens holder 24 is driven by the gel material.

The end portions of the individual wires 29 which have conductivity and lie on the lens holder 24 side are disposed in such a way that the top two wires 29 are electrically connected to the tracking coils 26a, 26b by soldering, the middle two wires 29 are electrically connected to the focusing coils 27a, 27b by soldering, and the bottom two wires 29 are electrically connected to the tilting coils 28a, 28b by soldering.

By this arrangement, as a current is supplied to the tracking coils 26a, 26b from the circuit board via the wires 29 based on a signal generated from the tracking error signal, the lens holder 24 is displaced in the tracking direction (same as the radial direction) by the electromagnetic action of the magnetic field generated by the permanent magnets 23a, 23b and the current flowing through the tracking coils 26a, 26b.

Likewise, as a current is supplied to the focusing coils 27a, 27b from the circuit board via the wires 29 based on a signal generated from the focus error signal, the lens holder 24 is displaced in the focusing direction (direction perpendicular to the recording surface of the optical disc 50) by the electromagnetic action. Further, as a current is supplied to the tilting coils 28a, 28b from the circuit board via the wires 29 based on a signal generated by a tilt sensor (not shown) provided in the optical pickup device 1, the lens holder 24 is turned in a direction around the axis which is orthogonal to the focusing direction and the tracking direction by the electromagnetic action.

That is, the permanent magnets 23a, 23b, the tracking coils 26a, 26b, the focusing coils 27a, 27b, and the tilting coils 28a, 28b work as a drive mechanism which drives the lens holder 24.

The general structure of the objective lens actuator 21 according to the present embodiment is as above described, and features of the objective lens actuator 21 according to the present embodiment will be explained below. The objective lens for a BD (first objective lens 17) is loaded in the objective lens actuator 21 according to the present embodiment. Because the working distance (WD; distance between a tip of the first objective lens 17 and the optical disc 50) becomes especially narrow when reading of information from a BD or recording of information to a BD is performed, a possibility of collision of the objective lenses 17, 18 and the optical disc 50 is raised higher. By this reason, a collision preventing portion 31 is set up on the lens holder 24 in order that the objective lenses 17, 18 and the optical disc 50 do not collide with each other. Further, in the lens holder 24, a cleaning portion 32 is also set up which performs cleaning of the optical disc 50 by contacting with the optical disc 50 when the collision preventing portion 31 collides with the optical disc 50. To set up the collision preventing portion 31 and the cleaning portion 32 is the feature of the present invention and hereinafter it will be explained in detail.

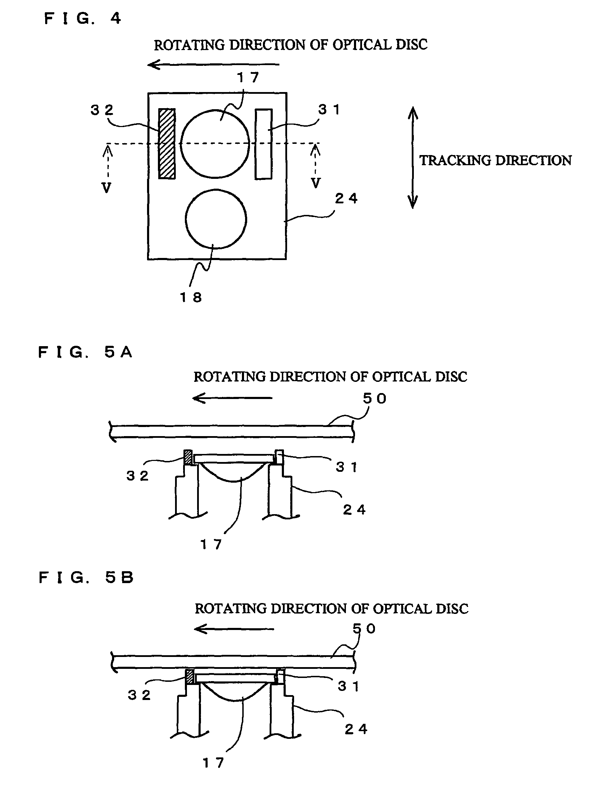

As for the explanation, it will be performed with reference to Fig. 4, Fig. 5A, and Fig. 5B in addition to Fig. 2 and Fig. 3. Fig. 4 is a schematic plan view to show the lens holder 24 when viewed from above. Fig. 5A and Fig. 5B are diagrams to show positional relation among the first objective lens 17, the optical disc 50, the collision preventing portion 31, and the cleaning portion 32 using schematic cross sectional views of the lens holder when cut along a line V - V in Fig. 4. When in detail, Fig. 5A is a diagram to show a state where the collision preventing portion 31, the cleaning portion 32, and the optical disc 50 do not collide with each other (normal state), and Fig. 5B is a diagram to show a state where the collision preventing portion 31, the cleaning portion 32, and the optical disc 50 collide with each other (state where disturbance or the like is generated).

The collision preventing portion 31 is composed of a plate like member which has approximately U shape as shown in Fig. 3B. An inlet portion 31a of the plate like member 31 having approximately U shape is inlet to a protruding portion 24c which is formed in outer peripheral side of the first holding portion 24a (portion to hold the first objective lens 17) of the lens holder 24 to be adhered and fixed. By this arrangement the collision preventing portion 31 is formed on the lens holder 24. The collision preventing portion 31 which is formed on the lens holder 24 is adjusted in its size in height direction such that it protrudes to the optical disc 50 side with a prescribed height higher than the first objective lens 17 (See, Fig. 5A). By this arrangement the collision of the objective lenses 17,18 and the optical disc 50 is prevented (See, Fig. 5B).

At this point in the present embodiment, two objective lenses 17, 18 are disposed, and they are in a structure in that the first objective lens 17 protrudes more to the optical disc 50 side than the second objective lens 18. As a result, the collision preventing portion 31 is structured as that it protrudes to the optical disc 50 side with a prescribed height higher than the first objective lens 17. Further in this embodiment, a structure is employed in that the collision preventing portion 31 is set up on the first objective lens side, however the present invention is not intended to be limited to this structure. It is no problem that a layout of the collision preventing portion 31, a planar size of the collision preventing portion 31 when viewed from above and the like may be modified within a range which does not depart from the object of the present invention.

As for a material of the member of which the collision preventing portion 31 is composed, materials that are softer than a protect layer (for example, polycarbonate) of the optical disc 50 and that do not damage the optical disc 50 when the collision preventing portion 31 and the optical disc 50 collide with each other such as polyacetal (POM resin), for example, are selected.

The lens holder 24 is made of, for example, liquid crystal polymer (LCP) or the like which has superior mechanical strength, dimension stability, and the like. As above described, because the lens holder 24 and the collision preventing portion 31 are composed of members which are made of different materials, a structure is employed in that the collision preventing portion 31 is fixed on the lens holder 24 by adhesive material in the present embodiment. However, a method to form the collision preventing portion 31 on the lens holder 24 is not limited to the structure of the present embodiment, and it can be modified adequately. That is, it is no problem that the collision preventing portion 31 is formed by two-color molding or the like as the case may be.

The cleaning portion 32 is made to have a similar shape as the collision preventing portion 31 in the present embodiment, and it is made by a plate like member which has approximately U shape. An inlet portion 32a of the plate like member having approximately U shape is inlet to a protruding portion 24d which is formed in outer peripheral side of the first holding portion 24a of the lens holder 24 to be adhered and fixed. By this arrangement the cleaning portion 32 is formed on the lend holder 24. Height of the cleaning portion 32 is enough that the cleaning portion 32 contacts with the optical disc 50 when the collision preventing portion 31 and the optical disc 50 collide with each other, and the cleaning portion 32 is adjusted in its height as such.

At this point, it is no problem that a structure is employed in which the cleaning portion 32 is made higher than the collision preventing portion 31 and the cleaning portion 32 contacts with the optical disc 50 before the collision preventing portion 31 contacts with the optical disc 50. As above described, it is no problem as far as the cleaning portion 32 contacts with the optical disc 50 when the collision preventing portion 31 and the optical disc 50 collide with each other.

As for a material of the member of which the cleaning portion 32 is composed, materials which have high retractility (for example, characteristic such as sponge) and high adsorptive property such as, for example, urethane, nylon, and the like are used. By this arrangement it becomes possible to remove stain, adhered object, and the like of the optical disc 50 when the cleaning portion 32 contacts with the optical disc 50. In addition, it is necessary that the material of the cleaning portion 32 does not generate worn object to be adhered on the optical disc 50 when the cleaning portion 32 contacts with the optical disc 50, the cleaning portion 32 should be made of such material. From this view point, it is preferable that the cleaning portion 32 is made of materials such as urethane, nylon, or the like, for example.

At this point the cleaning portion 32 and the lens holder 24 are composed of members which are made of different material. Because of this, a structure is employed in the present embodiment in that the cleaning portion 32 is fixed on the lens holder 24 by the adhesive material. However, the present invention is not always intended to be limited to this structure described in the embodiment as similar to the collision preventing portion 31.

In the present embodiment, the cleaning portion 32 is disposed in an substantially symmetrical position of the collision preventing portion 31 with respect to the first objective lens 17. Further, the cleaning portion 32 is disposed in a down stream side of a rotating direction of the optical disc 50 with respect to the collision preventing portion 31 (See, Figs. 4, 5). As above described, the collision preventing portion 31 is made of soft material such that it does not damage the optical disc 50 even when it collides with the optical disc 50. As a result there is a possibility that the collision preventing portion 31 generates worn object to be adhered on the optical disc 50 when the collision preventing portion 31 collides with the optical disc 50. In this regard, as the present embodiment, if the cleaning portion 32 is disposed in the down stream side of the collision preventing portion 31, the adhered object which is generated when the collision preventing portion 31 collides with the optical disc 50 is made be wiped out by the cleaning portion 32 that contacts with the optical disc 50 in the down stream side. By this arrangement, it becomes possible to remove at once the adhered object that is adhered on the optical disc 50. Because of this, it is preferable that the collision preventing portion 31 is disposed in the up stream side of the rotating direction of the optical disc 50 and the cleaning portion 32 is disposed in the down stream side of that as the present embodiment.

At this point, if rotating speed of the optical disc 50 is extremely slow, it may be conceivable that there is a possibility the adhered object is not cleaned because the cleaning portion 32 departs from the optical disc 50 (not in contact with the optical disc 50) before the adhered object which is generated by abrasion of the collision preventing portion 31 reaches the position of the cleaning portion 32. However, in a state where the optical disc 50 is rotating in a speed in which the reproducing or recording of the optical disc 50 can be performed, it is possible to perform cleaning of the adhered object by the structure according to the present embodiment.

Further, from a view point to remove the adhered object which is generated by abrasion of the collision preventing portion 31 as above described, it is preferable that a size of the cleaning portion 32 is equal to or larger than that of the collision preventing portion 31. When the cleaning portion 32 is structured as such, it becomes possible to remove at once the adhered object which is generated by collision of the collision preventing portion 31 and the optical disc 50 with pretty high probability. Further, because the cleaning portion 32 has a function to perform cleaning the optical disc 50 with contact, it is preferable that the cleaning portion 32 is structured such that contacting area of the cleaning portion 32 with the optical disc 50 becomes as large as possible within allowable range of the structure of the objective lens actuator 21.

Further, in the present embodiment the cleaning portion 32 is set up to be in a state where it extends in a parallel direction with the tracking direction (See, Fig. 4). In case where such structure is employed when the cleaning portion 32 and the optical disc 50 contact with each other, an area where the cleaning portion 32 can remove the stain and the adhered object by the rotation of the optical disc 50 becomes wider. Because of this the structure of the present embodiment is preferable when it is considered that cleaning function of the cleaning portion 32 is made be effective one.

At this point, in the present embodiment a structure is employed in that the collision preventing portion 31 and the cleaning portion 32 are disposed in a substantially symmetrical position with respect to the first objective lens 17 in consideration of space saving, balance of parts, and the like, however, the present invention is not intended to be limited to this structure. For example, it is no problem that a structure or the like is employed in which the cleaning portion 32 is disposed at left side of the collision preventing portion 31 (the cleaning portion 32 is disposed in the right side of the first objective lens 17) in Fig. 4.

In the above described embodiment two objective lenses are mounted on the objective lens actuator 21. However, the present invention is not intended to be limited to this structure. It is of course no need to say that the present invention can be applied irrespective of number of the objective lenses that are mounted on the objective lens actuator 21.

Further, in the above described embodiment the objective lens actuator is made by a wire supporting method in that the objective lens actuator is supported by wires. However, the present invention is not limited to this method, and the present invention can be widely applied to any objective lens actuator which has a lens holder to hold the objective lens, and drives the objective lens by moving the lens holder in prescribed directions. That is, the present invention can be applied to, for example, so-called shaft sliding type objective lens actuator in that the objective lens is driven by sliding the lens holder along a supporting shaft and the like.

In the present embodiment, a structure is employed in that the optical pickup device in which the objective lens actuator in accordance with the present invention is included, is applicable to three kinds of optical discs such as a BD, a DVD, and a CD, however, the present invention is not intended to be limited to this optical pickup device. For example, it is no problem that the optical pickup device is applicable only to one kind of the optical disc such as a BD, a DVD, or the like, it is no problem that the optical pickup device is applicable to other kind of optical discs, and the present invention can be widely applied to any kind of optical pickup device. However, the present invention is very effective when it is applied to an optical pickup device in which the working distance becomes narrow, for example, that is applicable to an optical disc such as a BD (optical pickup device which can perform reading of information or recording of information from/to an optical disc such as a BD).

## Claims

1. An objective lens actuator comprising:
an objective lens which condenses a light beam on a recording surface of an optical recording medium;
a lens holder which holds the objective lens;
a driving mechanism which makes the lens holder capable of moving at least in a focusing direction that is a direction perpendicular to the recording surface and a tracking direction that is a direction parallel to a radial direction of the optical recording medium, **characterized in that**
a collision preventing portion which prevents collision of the objective lens and the optical recording medium and a cleaning portion which performs cleaning of the optical recording medium when the objective lens and the collision preventing portion collide with each other, are set up on the lens holder so as to oppose to the optical recording medium.

2. The objective lens actuator according to Claim 1, **characterized in that** the collision preventing portion and the cleaning portion are disposed such that the collision preventing portion is located in an up stream side of a rotating direction of the optical recording medium and the cleaning portion is located in a down stream side of the rotating direction of the optical recording medium.

3. The objective lens actuator according to Claim 2, **characterized in that** the cleaning portion has a size which is approximately equal to or larger than that of the collision preventing portion.

4. The objective lens actuator according to any one of Claim 1 to Claim 3, **characterized in that** the cleaning portion has a shape that is elongated in a direction substantially parallel to the tracking direction.

5. An optical pickup device which includes the objective lens actuator according to any one of Claim 1 to Claim 4.

6. The optical pickup device according to Claim 5 which is applicable to at least a Blu-ray Disc.
